# EUROPÄISCHE PATENTSCHRIFT

(11) **EP 3 861 240 B1**
(45) Veröffentlichungstag und Bekanntmachung des Hinweises auf die Patenterteilung: **22.10.2025**
(21) Anmeldenummer: 20772238.0
(22) Anmeldetag: 08.09.2020
(51) Int. Cl.: F16P 1/02

(54) **ABDECKVORRICHTUNG FÜR EINE MASCHINENKABINE**
COVERING DEVICE FOR A MACHINE CABINET
DISPOSITIF DE RECOUVREMENT POUR UNE ARMOIRE DE MACHINE

(30) Priorität: 13.09.2019 DE 202019105099 U
(43) Veröffentlichungstag der Anmeldung: 11.08.2021
(73) Patentinhaber: Möller Werke GmbH, 33649 Bielefeld (DE)
(72) Erfinder: VOGT, Karsten, 33649 Bielefeld (DE); GRANDT, Sebastian, 33829 Borgholzhausen (DE); DIETRICH, Stefan, 33154 Salzkotten (DE)
(74) Vertreter: Schober, Mirko
(86) Internationale Anmeldenummer: PCT/EP2020/075077
(87) Internationale Veröffentlichungsnummer: WO 2021/048125

(56) Entgegenhaltungen:
- DE-A1- 102005 013 496
- DE-U1- 202014 100 698

## Beschreibung

### TECHNISCHES GEBIET

Die Erfindung betrifft eine Abdeckvorrichtung für eine Maschinenkabine gemäß dem Oberbegriff von Anspruch 1 sowie eine damit ausgestattete Maschinenkabine mit den Merkmalen von Anspruch 18. Die Erfindung betrifft außerdem ein Maschinen-system mit einer solchen Maschinenkabine nach den Merkmalen von Anspruch 21.

### STAND DER TECHNIK

Abdeckvorrichtungen dienen der zumindest temporären Abschirmung von Bereichen zwischen oder an Bauteil Eine bekannte Abdeckvorrichtung wird in der DE 10 2005 013 496 A1 offenbart. Deren in Bezug auf ihre Bewegungsrichtung streckbare sowie stauchbare Schutzabdeckung erfüllt dabei vielfältige Aufgaben, die vom reinen Sichtschutz über den Schutz vor Verschmutzung bis hin zur Zugriffskontrolle reichen. Verstärkte Ausgestaltungen bieten einen erhöhten Schutz vor Penetration, weshalb derartige Abdeckvorrichtungen primär im Bereich rotierender wie beispielsweise spanabhebender Maschinen eingesetzt werden. Hierbei bilden sie wenigstens einen Teil einer Maschinenkabine, in welcher mindestens eine Maschine zumindest bereichsweise angeordnet ist. Die Längenveränderbarkeit derartiger Abdeckvorrichtungen erlaubt deren jeweils endseitige Verbindung mit einem Kopplungsbereich der Maschinenkabine und einem hierzu relativ beweglichen Maschinenteil der Maschine. Neben einer geeigneten Materialwahl kann insbesondere der Durchschlagschutz einer solchen Schutzabdeckung durch die Anordnung zusätzlicher Abschirmelemente wie beispielsweise mittels Lamellen aus Blech erhöht sein.

Insbesondere das Be- und Entladen mit schweren Werkstücken erfordert ein temporäres Öffnen der Maschinenkabine, um Teilen eines hierfür eingesetzten Hebezeugs den Zugang zu gewähren, wie beispielsweise dessen Zugmitteln beim Eingriff über den Dachbereich. Hierzu muss sich wenigstens eine der Abdeckvorrichtungen schnell und einfach unter Ausbildung einer Zugangsöffnung auf ein möglichst kompaktes Maß reduzieren lassen. Um dies zu ermöglichen, ist deren Schutzabdeckung über eines ihrer beiden Enden lösbar mit dem Kopplungsbereich der Maschinenkabine gekoppelt. Im von diesem entkoppelten Zustand lässt sich die Schutzabdeckung quasi zu einem Paket stauchen und als solches entlang von Schienen der Abdeckvorrichtungen in Bezug auf deren Bewegungsrichtung verfahren, beispielsweise über die weiterhin bestehende Verbindung zum Maschinenteil und dessen entsprechende Verlagerung. Das Koppeln und Entkoppeln erfolgt üblicherweise automatisiert, um möglichst schnelle Reaktionszeiten zu erhalten. In diesem Zusammenhang haben sich bereits vielfältige Verriegelungssysteme etabliert. Allgemein können die so ausgestatteten Abdeckvorrichtungen vorzugsweise im Dachbereich einer Maschinenkabine angeordnet sein, wobei selbstverständlich auch deren Einsatz im Wandbereich einer Maschinenkabine sowie in wenigstens einem den Dach- und Wandbereich einer Maschinenkabine gleichzeitig abdeckenden Bereich vorzufinden ist.

Aus DE 20 2014 100 698 U1 ist eine Abdeckvorrichtung für eine Maschinenkabine bekannt, welche eine in Bezug auf ihre Bewegungsrichtung streckbare sowie stauchbare Schutzabdeckung umfasst. An einem ersten Ende der Schutzabdeckung ist ein erstes Anschlusselement angeordnet, welches zur lösbaren Kopplung mit wenigstens einem Kopplungsbereich einer Maschinenkabine ausgebildet ist. Demgegenüber ist an einem zweiten Ende der Schutzabdeckung ein zweites Anschlusselement angeordnet, welches zur Verbindung mit einem relativ zur Maschinenkabine beweglichen Maschinenteil einer Maschine ausgebildet ist. Dabei ist die Schutzabdeckung inmitten zweier parallel zu ihrer Bewegungsrichtung verlaufenden Schienen gelegen, welche zur Festlegung am Maschinenteil oder/und wenigstens einem Bereich der Maschinenkabine vorgesehen sind. Das wenigstens eine sich dabei zwischen diesen Schienen erstreckende Anschlusselement ist über seine Endabschnitte an den beiden Schienen abgestützt.

DE 20 2014 007 338 U1 beschreibt ebenfalls eine Abdeckvorrichtung, deren Verriegelungssystem zapfenförmige Bolzen am beweglichen Maschinenteil vorsieht. Mit diesen Bolzen korrespondierende Teile eines Anschlusselements ihrer Schutzabdeckung sehen einen Riegel mit wenigstens einer schlüssellochförmigen Öffnung vor. Deren größerer Öffnungsteil ist so an den verdickten Kopf des Bolzens angepasst, dass dieser hin-durchführbar und über eine Relativbewegung des Riegels blockierbar ist, indem der den Bolzen dann umgebende kleinere Öffnungsteil dessen Herausziehen verhindert.

In DE 10 2009 060 097 A1 wird eine weitere Ausgestaltungsmöglichkeit für das Verriegelungssystem einer Abdeckvorrichtung beschrieben, zu deren Ansteuerung eine Verfahrbewegung des Maschinenteils im Überhubbereich genutzt wird. Schwenkbar gelagerte Hakenelemente werden hierbei über mit diesen gekoppelte Gestänge ausgerichtet, um in mit diesen korrespondierende Haltebereiche zu greifen.

Eine weitere Abdeckvorrichtung mit Verriegelungssystem findet sich in DE 10 2007 043 808 A1. Hier erfolgt die An- und Abkopplung vom Maschinenteil durch Koppelglieder, die über eine in dieselbe Richtung erfolgende Druckbetätigung abwechselnd ver- und entriegelbar sind.

Die Verriegelungssysteme der bekannten Abdeckvorrichtungen erlauben ein automatisiertes An- und Abkoppeln der Schutzabdeckung. In der Praxis weisen diese einen mitunter erhöhten Einstellungsaufwand bis hin zu Ausfällen auf, die primär auf die im Betrieb auftretenden, insbesondere kraftbedingten, Verformungen der Maschinenkabine und deren Anschlusselemente zurückzuführen sind. Diese Bewegungen werden mintunter nur teilweise auf die Abdeckvorrichtung übertragen, was in der Folge zu einer temporären Fehlausrichtung der miteinander in Eingriff zu bringenden Teile des jeweiligen Verriegelungssystems führen kann.

### DIE ERFINDUNG

Der vorliegenden Erfindung liegt daher die Aufgabe zugrunde, eine gattungsgemäße Abdeckvorrichtung sowie eine damit ausgestattete Maschinenkabine dahingehend weiterzuentwickeln, dass die Zuverlässigkeit des Verriegelungssystems verbessert wird.

Diese Aufgabe wird durch eine Abdeckvorrichtung mit den Merkmalen des Anspruchs 1 sowie eine Maschinenkabine mit den Merkmalen des Anspruchs 18 und durch ein Maschinensystem mit den Merkmalen des Anspruchs 21 gelöst. Vorteilhafte Ausgestaltungen sind Gegenstand der jeweiligen Unteransprüche.

Erfindungsgemäß wird eine verschiebliche Führung der Endabschnitte wenigstens eines der beiden Anschlusselemente entlang der Schienen vorgeschlagen, die eine unmittelbare Übertragung etwaiger Einflüsse aus der Maschinenkabine zwischen den beiden Schienen zulässt. Dies meint, dass eine auf eine dieser Schienen einwirkende Kraft durch wenigstens eines der beiden Anschlusselemente unmittelbar auf die jeweils andere Schiene übertragbar ist. Im Rahmen der Erfindung wurde erkannt, dass eine Maschinenkabine oder/und etwaige an der Maschine angebrachten Verbindungsteile ihrer wenigstens einen Abdeckvorrichtung im Betrieb bereits bauartbedingt mitunter große Bewegungen in einzelnen Bereichen aufweisen. Diese werden zwangsläufig auf die Schienen der Abdeckvorrichtung und deren Verriegelungssystem übertragen, was sich unmittelbar auf die Maßhaltigkeit der Abdeckvorrichtung selbst oder/und hin zum Maschinenteil bzw. zur Maschinenkabine auswirkt. Diese Bewegungen bewirken entsprechende Winkelveränderungen und Verwindungen der einzelnen Teile zueinander, die letztlich zum Versagen des Verriegelungssystems führen können. Ursächlich hierfür sind entsprechende Fehlstellungen zwischen den Anschlusselementen gegenüber der restlichen Abdeckvorrichtung, dem beweglichen Maschinenteil oder/und dem wenigstens einen Kopplungsbereich der Maschinenkabine. Die erfindungsgemäße Ausgestaltung der verschieblichen Führung sieht daher vor, dass eine zumindest bereichsweise räumliche Auslenkung einer der Schienen unmittelbar auf die jeweils andere Schiene übertragbar ist. Dies bewirkt, dass die Endabschnitte wenigstens eines der beiden Anschlusselemente entsprechend spielfrei in oder/und an den Schienen geführt sind. Die bisherigen Ausführungen sehen hier ein lediglich gleitendes oder abrollendes Aufliegen der Endabschnitte auf einem Teil der Schienen vor, was mit entsprechendem Spiel und damit verbundener Bewegungsfreiheit verbunden ist. Dieses im Vergleich insofern große Spiel kann etwaige Fehlstellungen der miteinander in Eingriff zu bringenden Teile des Verriegelungssystems zulassen, die sich dann schlichtweg nicht finden.

Die erfindungsgemäße Spielfreiheit sorgt in der verschieblichen Führung des wenigstens einen Anschlusselements dafür, dass etwaige Auslenkungen der an der Maschinenkabine oder/und dem beweglichen Maschinenteil gelegenen und für die Kopplung relevanten Teile möglichst direkt auch auf das wenigstens eine Anschlusselement übertragen werden. Im Ergebnis bleiben die miteinander zu koppelnden Bereiche daher trotz etwaiger Auslenkungen, Verwindungen und sonstigen Bewegungen stets in gewünschter Weise zueinander positioniert. Mit anderen Worten wird das wenigstens eine Anschlusselement über seine spielfreie Führung strukturell in die Maschinenkabine und deren Maschine eingebunden.

Da es hierbei primär um die Übertragung von parallel zur Erstreckung des wenigstens einen Anschlusselements verlaufenden Kräften oder/und Auslenkungen zwischen den gegenüberliegenden Schienen gehen kann, könnte eine in dieser Richtung entsprechend abgestützte Führung bereits ausreichend sein.

Unter einer unmittelbaren Übertragbarkeit von Kräften wird im Sinne der Erfindung eine solche hierfür notwendige spielfreie Führung des wenigstens einen Anschlusselements an den Schienen verstanden, die Relativbewegungen zwischen den Schienen und dem Anschlusselement - mit Ausnahme von dessen Verschieblichkeit entlang der Schienen - so weit herabsetzt, dass diese innerhalb der für das Verriegelungssystem zu dessen sicherem Betrieb erforderlichen Toleranzen liegen.

Gemäß einer bevorzugten Weiterbildung des grundsätzlichen Erfindungsgedankens können die Schienen jeweils wenigstens ein Längsprofil und mindestens einen entlang des Längsprofils verschieblichen Schlitten aufweisen. Das Längsprofil kann hierzu beispielsweise einen U- oder C-förmigen Querschnitt aufweisen, welcher den wenigstens einen Schlitten zumindest von drei Seiten aus wenigstens bereichsweise umgreifen kann. Auf diese Weise können die mit den Anschlusselementen verbundenen Schlitten der Schienen dann zumindest in Bezug auf die Längsrichtung des wenigstens einen Anschlusselements spielfrei in oder/und an den Längsprofilen der Schienen geführt sein. Eine derartige Ausgestaltung weist bereits ein überaus geringes Spiel zwischen den Längsprofilen und den Schlitten der Schienen auf.

Hierauf aufbauend sieht die Erfindung vor, dass die Schlitten und die Längsprofile der Schienen zumindest in einer Ebene unter Eingliederung von Kugellagern oder/und Gleitlagern gegeneinander abgestützt sein können. Auf diese Weise lässt sich die Spielfreiheit nochmals erhöhen. Zudem wird der Lauf der linearen Verlagerbarkeit verbessert.

Mit Blick auf das Verriegelungssystem sieht eine bevorzugte Ausgestaltung vor, dass an dem ersten Anschlusselement eine parallel zu dessen Längsrichtung verschiebliche erste Verriegelungsleiste angeordnet sein kann. Diese weist wenigstens ein Hakenelement auf, welches mit einer Öffnung oder Vertiefung des wenigstens einen Kopplungsbereichs der Maschinenkabine korrespondiert. Über eine Verschiebung der ersten Verriegelungsleiste relativ zum ersten Anschlusselement ist das Hakenelement somit zwischen einer Verriegelungsstellung und einer Entriegelungsstellung verlagerbar. Auf diese Weise kann das in Entriegelungsstellung befindliche Hakenelement in die Öffnung oder Vertiefung des Kopplungsbereichs eintauchen und anschließend durch eine entsprechende Verschiebung der ersten Verriegelungsleiste in seine Verriegelungsstellung verlagert werden, in der es beispielsweise eine Hinterschneidung umgreift und insofern nicht mehr aus der Öffnung oder Vertiefung herausziehbar ist.

Gemäß einer bevorzugten Ausgestaltung kann an dem zweiten Anschlusselement eine parallel zu dessen Längsrichtung verschiebliche zweite Verriegelungsleiste angeordnet sein. Diese weist wenigstens einen Vorsprung auf, welcher bei einer Annäherung der beiden Anschlusselemente dann zumindest bereichsweise innerhalb einer korrespondierenden Ausnehmung der ersten Verriegelungsleiste anordenbar ist. Nach der Anordnung des Vorsprungs innerhalb dieser Ausnehmung ist eine Verlagerung der zweiten Verriegelungsleiste durch deren wenigstens einen Vorsprung in zumindest eine Richtung auf das erste Anschlusselement mechanisch übertragbar. Auf diese Weise bewirkt die Verlagerung der zweiten Verriegelungsleiste automatisch eine gleichgerichtete Verlagerung der ersten Verriegelungsleiste, sofern diese über den wenigstens einen Vorsprung und die damit korrespondierende Ausnehmung in einem entsprechenden Eingriff oder einer entsprechenden Ausrichtung zueinander stehen.

In diesem Zusammenhang wird es als vorteilhaft angesehen, wenn die zweite Verriegelungsleiste durch das Zusammenwirken mit einem Linearantrieb zumindest in eine Richtung aktiv verschieblich ist. Alternativ oder ergänzend hierzu kann die zweite Verriegelungsleiste durch das Zusammenwirken mit dem Maschinenteil zumindest in eine Richtung aktiv verschieblich sein. In beiden Fällen ist die zweite Verriegelungsleiste so in zumindest eine Richtung ihrer Verschieblichkeit aktiv verlagerbar. Weiterhin alternativ kann besagter Linearantrieb selbstverständlich auch im Bereich des ersten Anschlusselements angeordnet sein, wo es in gleicher Weise dann mit der ersten Verriegelungsleiste zusammenwirkt.

Im Zusammenhang mit der Anordnung der Verriegelungsleisten wird es als besonders vorteilhaft angesehen, wenn an der Ausnehmung der ersten Verriegelungsleiste eine Hinterschneidung angeordnet ist. Über die Hinterschneidung ist durch eine Verschiebung der zweiten Verriegelungsleiste deren Vorsprung in einer Weise mit der Ausnehmung in Eingriff bringbar, dass die beiden unter Stauchung der Schutzabdeckung einander angenäherten Anschlusselemente lösbar miteinander koppelbar sind. Mit anderen Worten bewirkt das Hintergreifen der Hinter-schneidung durch den Vorsprung eine Verriegelung, die ein Entfernen der beiden einander angenäherten Anschlusselemente so lange unterbindet, bis die Verriegelung durch eine entsprechende Rückverlagerung des Vorsprungs wieder gelöst ist.

Bevorzugt kann die erste Verriegelungsleiste des ersten Anschlusselements durch ein erstes Federelement belastet sein. Das erste Federelement wirkt dabei derart mit der ersten Verriegelungsleiste zusammen, dass diese nur entgegen der auf ihr lastenden Federkraft in den entriegelten Zustand ihres wenigstens einen Hakenelements verschieblich ist. Insbesondere aus Sicherheitsgründen ist so bei Ausfall etwaiger aktiv angetriebener Systeme sichergestellt, dass das wenigstens eine Hakenelement stets in seinem verriegelten Zustand verbleibt.

Weiterhin bevorzugt kann die zweite Verriegelungsleiste des zweiten Anschlusselements durch ein zweites Federelement belastet sein. Das zweite Federelement wirkt dabei derart mit der zweiten Verriegelungsleiste zusammen, dass beide Anschlusselemente in ihrem miteinander gekoppelten Zustand nur durch eine Verschiebung der zweiten Verriegelungsleiste entgegen der Federbelastung voneinander entkoppelbar sind. Insbesondere aus Sicherheitsgründen ist so bei Ausfall etwaiger aktiv angetriebener Systeme sichergestellt, dass die Kopplung der beiden Anschlusselemente stets aufrechterhalten bleibt, sofern das zweite Anschlusselement nicht aktiv zu deren Entkopplung verlagert wird.

Als Federelemente werden im Sinne der Erfindung mechanische Energie speichernde Mittel verstanden, die in stets einer Richtung mechanische Arbeit verrichten. Hierunter können beispielsweise sämtliche Formen von Federn sowie komprimierbare Elastomere und Fluide fallen, die allesamt entsprechende Rückstellkräfte aufbauen können.

Grundsätzlich ist denkbar, dass die zuvor aufgezeigten Ausgestaltungen des ersten Anschlusselements für das zweite Anschlusselement und die des zweiten Anschlusselements für das erste Anschlusselement gelten können. Mit anderen Worten können die beiden Anschlusselemente bzw. deren Merkmale in sinnvoller Weise ihre Plätze tauschen, ohne den Rahmen der Erfindung zu verlassen.

Nach einer vorteilhaften Weiterbildung der Erfindung kann ein Anzeigemittel am ersten Anschlusselement angeordnet sein. Das Anzeigemittel ist dabei so mit der ersten Verriegelungsleiste verbunden, dass die jeweilige Stellung des Hakenelements wenigstens in Bezug auf dessen Verriegelungsstellung oder/und Entriegelungsstellung anzeigbar ist. Anzeigbar meint hierbei dessen optische Wahrnehmbarkeit. Bevorzugt kann dies zumindest im von dem wenigstens einen Kopplungsbereich der Maschinenkabine entkoppelten Zustand des ersten Anschlusselements möglich sein, sofern das Anzeigemittel ansonsten verdeckt ist und nur durch eine entsprechende Verlagerung des ersten Anschlusselements weg vom Kopplungsbereich der Maschinenkabine in den Sichtbereich tritt.

Die Erfindung sieht vor, dass eine Anschlagleiste an einer der Schienen angeordnet sein kann, entlang der dann die erste Verriegelungsleiste entgegen der Federbelastung durch das erste Federelement in der Entriegelungsstellung ihres wenigstens einen Hakenelements haltbar ist. Mit anderen Worten weisen Anschlagleiste und erste Verriegelungsleiste dabei einen zumindest indirekten Kontakt zueinander auf, der einer durch das erste Federelement angestrengten Verschiebung der ersten Verriegelungsleiste entgegensteht. Der Kontakt bleibt so lange bestehen, wie die lineare Verlagerung der ersten Verriegelungsleiste an den Schienen entlang der Anschlagleiste verläuft. Der Kontakt kann dabei beispielsweise gleitend oder/und abrollend erfolgen.

Hierauf aufbauen kann die Länge der Anschlagleiste dabei in vorteilhafter Weise so gewählt, dass bei einer Verlagerung des ersten Anschlusselements in Bezug auf die Bewegungsrichtung der Schutzabdeckung hin zum wenigstens einen Kopplungsbereich der Maschinenkabine die erste Verriegelungsleiste wieder in die Verriegelungsstellung ihres wenigstens einen Hakenelements verschiebbar ist. Die Verschiebung kann dann insbesondere aufgrund der Federbelastung erfolgen. Auf diese Weise ist ein Sicherheitssystem etabliert, das bei Ausfall einer aktiv ansteuerbaren Komponente die erste Verriegelungsleiste so lange in der Entriegelungsstellung hält, bis das erste Anschlusselement seine Koppelstellung am wenigstens einen Koppelbereich der Maschinenkabine erreicht, in der die federbelastete erste Verriegelungsleiste sodann in die Verriegelungsstellung springt. Auf dem Weg dahin kann die federbelastete erste Verriegelungsleiste derart bremsend an die Anschlagleiste angelegt sein, dass eine unkontrollierte Verlagerung der, insbesondere als gestauchtes Paket vorliegenden, Schutzabdeckung wirksam verhindert ist.

Nach einer bevorzugten Ausgestaltung kann/können die erste Verriegelungsleiste oder/und die zweite Verriegelungsleiste jeweils an einer Linearführung angeordnet sein. In vorteilhafter Weise kann es sich dabei um eine wie bereits an anderer Stelle näher beschriebene spielfreie Linearführung handeln. Hierdurch lässt sich eine insgesamt präzise Führung erreichen, bei der insbesondere der Verschieblichkeit entgegenstehende Widerstände wie beispielsweise Reibungen auf ein Minimum reduzierbar sind.

Gemäß einer vorteilhaften Weiterbildung kann die zweite Verriegelungsleiste mit einem Positionssensor zusammenwirken. Dieser kann beispielsweise am Linearantrieb angeordnet oder in diesen integriert sein. Der Positionssensor kann zur Erfassung der verschieblichen Lage der zweiten Verriegelungsleiste relativ zum zweiten Anschlusselement dienen. Die so gewonnenen Informationen können beispielsweise an eine Maschinensteuerung übermittelt und darin entsprechend berücksichtigt werden.

Auch wenn der Linearantrieb beispielsweise elektrisch sein kann, wird es als vorteilhaft angesehen, wenn dieser pneumatisch antreibbar ist. Bei den hier in Rede stehenden Maschinen sind oftmals bereits Druckluftleitungen vorhanden, so dass diese direkt zum Betrieb des Linearantriebs genutzt werden können. Auch können Sicherheitsbestimmungen die Verwendung von Druckluft vorschreiben.

Grundsätzlich sieht die Erfindung vor, dass die Schutzabdeckung der erfindungsgemäßen Abdeckvorrichtung einen in Bezug auf die Bewegungsrichtung längenveränderbaren Faltenbalg aufweisen kann. Dieser kann beispielsweise auf wenigstens einem Zuschnitt aus einem wenigstens bereichsweise beschichteten oder unbeschichteten Textil gebildet sein oder einen solchen aufweisen. Denkbar ist auch die Verwendung von Kunststoff für den Zuschnitt.

In einer Weiterführung kann eine Deckseite des Faltenbalgs mit sich wenigstens abschnittsweise überlappenden und während seiner Längenänderung gegeneinander verschieblichen Lamellen verkleidet sein. Bei den Lamellen kann es sich beispielsweise um solche aus Kunststoff oder/und Metall wie beispielsweise Blech handeln. In jedem Fall erhöhen die Lamellen den Widerstand der Schutzabdeckung gegenüber umherfliegenden Spänen sowie dem Durchschlag von beispielsweise größeren Materialteilen.

Die nunmehr vorgestellte erfindungsgemäße Abdeckvorrichtung zeigt eine wirtschaftlich herstellbare und aufwandsarm zu betreibende Abdeckvorrichtung, deren Verriegelungssystem eine erhöhte Resistenz gegenüber den aus der Maschinenkabine oder/und dem beweglichen Maschinenteil einwirkenden Einflüssen aufweist. Die mit der Erfindung erreichbare Zuverlässigkeit des Verriegelungssystems erfordert keinerlei aufwendige Einstell- sowie Nachstellarbeiten, da insbesondere die möglichst spielfreie Führung des wenigstens einen Anschlusselements an den Schienen diese ausreichend in die Struktur einer Maschinenkabine einfügt, so dass etwaige Bewegungen und Verwindungen die Maschinenkabine und die Abdeckvorrichtung gleichermaßen betreffen. Auf diese Weise sind die miteinander in Eingriff zu bringenden Teile des Verriegelungssystems stets so zueinander ausgerichtet, dass diese unanfällig gegenüber den beschrieben Einflüssen sind.

Weiterhin ist die Erfindung auf eine Maschinenkabine gerichtet, welche wenigstens eine wie zuvor beschriebene erfindungsgemäße Abdeckvorrichtung besitzt. Die sich hieraus ergebenden Vorteile wurden bereits im Zusammenhang mit der erfindungsgemäßen Abdeckvorrichtung näher erläutert, so dass zur Vermeidung von Wiederholungen an dieser Stelle auf die entsprechenden Ausführungen hierzu verwiesen wird.

Grundsätzlich kann die Abdeckvorrichtung der Maschinenkabine diverse Ausrichtungen aufweisen, in denen die Bewegungsrichtung ihrer Schutzabdeckung linear oder zumindest teilweise gekrümmt verlaufen kann.

So kann die Abdeckvorrichtung in Bezug auf die Bewegungsrichtung zumindest abschnittsweise parallel oder unter Einschluss eines Neigungswinkels von kleiner 45° zu einer Horizontalen ausgerichtet sein. Eine derartige Anordnung ist beispielsweise im Dachbereich der Maschinenkabine anzutreffen, wobei diese auch bis in deren Wandbereich hineinreichen kann. Alternativ oder ergänzend hierzu kann die Abdeckvorrichtung in Bezug auf die Bewegungsrichtung ihrer Schutzabdeckung zumindest abschnittsweise parallel oder unter Einschluss eines Neigungswinkels von kleiner 45° zu einer Vertikalen ausgerichtet sein. Eine derartige Anordnung ist beispielsweise im Wandbereich der Maschinenkabine anzutreffen, wobei diese auch bis in deren Dachbereich hineinreichen kann.

Schließlich betrifft die Erfindung ein Maschinensystem, welches eine wie zuvor aufgezeigte erfindungsgemäße Maschinenkabine mit wenigstens einer erfindungsgemäßen Abdeckvorrichtung besitzt sowie eine zumindest bereichsweise innerhalb der Maschinenkabine angeordnete Maschine aufweist. Die sich hieraus ergebenden Vorteile wurden bereits im Zusammenhang mit der erfindungsgemäßen Abdeckvorrichtung sowie der erfindungsgemäßen Maschinenkabine näher erläutert, so dass zur Vermeidung von Wiederholungen an dieser Stelle auf die entsprechenden Ausführungen hierzu verwiesen wird.

### KURZBESCHREIBUNG DER ZEICHNUNGSABBILDUNGEN

Die Erfindung wird im Folgenden anhand eines in den Figuren schematisch dargestellten Ausführungsbeispiels näher erläutert. Es zeigen:
- Fig. 1: eine erfindungsgemäße Abdeckvorrichtung mit ihrer im gestreckten Zustand gezeigten Schutzabdeckung in einer Aufsicht,
- Fig. 2: die Abdeckvorrichtung aus Fig. 1 mit ihrer im gestauchten Zustand gezeigten Schutzabdeckung in zurückgeschobener Stellung in ansonsten gleicher Darstellungsweise,
- Fig. 3: die Abdeckvorrichtung aus Fig. 1 mit gestreckter Schutzabdeckung in einer perspektivischen Darstellungsweise ihrer Unterseite,
- Fig. 4: die Abdeckvorrichtung aus Fig. 1 mit gestreckter Schutzabdeckung in einer perspektivischen Darstellungsweise ihrer Oberseite,
- Fig. 5: die Abdeckvorrichtung aus Fig. 4 mit ihrer im gestauchten Zustand gezeigten Schutzabdeckung in gleicher Darstellungsweise und ansonsten zurückgeschobener Stellung wie in Fig. 2,
- Fig. 6: die Abdeckvorrichtung aus Fig. 1 bis Fig. 5 mit gestreckter Schutzabdeckung in einem Schnitt entlang ihrer Bewegungsrichtung X-X sowie
- Fig. 7: einen Detailausschnitt der Abdeckvorrichtung aus Fig. 1 bis Fig. 6 in einem Schnitt quer zur Bewegungsrichtung der Schutzabdeckung.

### BESTER WEG ZUR AUSFÜHRUNG DER ERFINDUNG

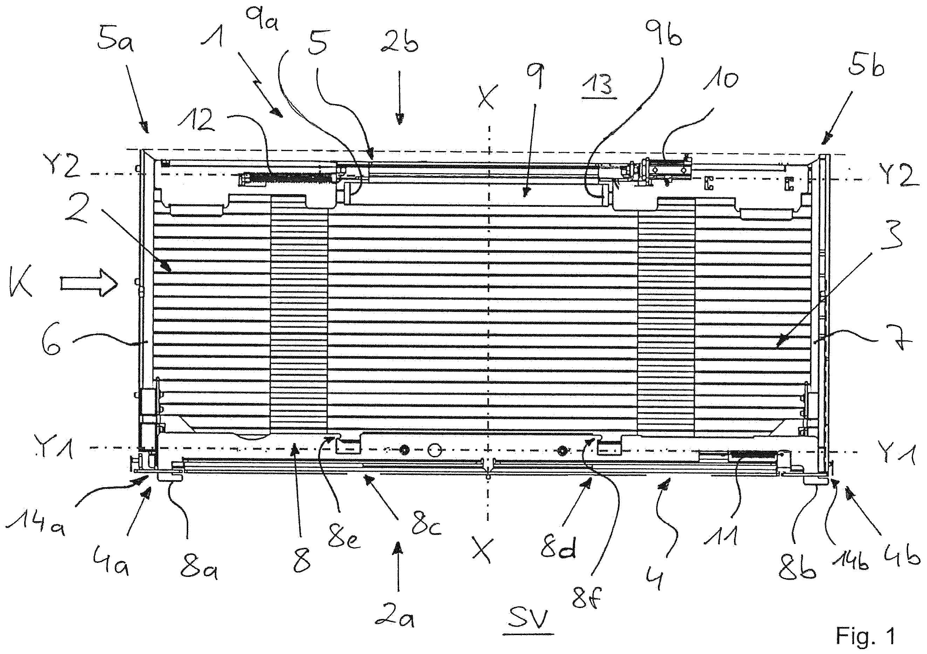

Fig. 1 zeigt die schematische Darstellung einer erfindungsgemäßen Abdeckvorrichtung 1 in einer Aufsicht. Die Abdeckvorrichtung 1 umfasst eine Schutzabdeckung 2, deren Länge in Bezug auf ihre Bewegungsrichtung X durch Strecken oder Stauchen veränderbar ist. Die Schutzabdeckung 2 weist hierzu einen unter Ausbildung von Innenfalten und Außenfalten entsprechend längenveränderbaren Faltenbalg 3 auf. Dabei kann eine Deckseite des Faltenbalgs 3 in nicht näher gezeigter Weise mit Lamellen verkleidet sein, die sich wenigstens abschnittsweise überlappen und während der Längenänderung gegeneinander verschieblich sind. Die sich in Bezug auf die Bewegungsrichtung X gegenüberliegenden Enden 2a, 2b der Schutzabdeckung 2 sind jeweils mit einem Anschlusselement 4, 5 ausgestattet, von denen ein erstes Anschlusselement 4 am ersten Ende 2a der Schutzabdeckung 2 angeordnet ist und ein zweites Anschlusselement 5 am zweiten Ende 2b der Schutzabdeckung 2 angeordnet ist. Das erste Anschlusselement 4 ist endseitig mit seinen Endabschnitten 4a, 4b an zwei sich parallel zur Bewegungsrichtung X erstreckenden und quer zu dieser voneinander beabstandeten Schienen 6, 7 abgestützt. Hierdurch erstreckt sich das erste Anschlusselement 4 in seiner Längsrichtung Y1 zwischen den beiden Schienen 6, 7. Das zweite Anschlusselement 5 verläuft min seiner Längsrichtung Y2 parallel zur Längsrichtung Y1 des ersten Anschlusselements 4, wobei es sich entweder außerhalb der Schienen 6, 7 oder ebenfalls zwischen den beiden Schienen 6, 7 erstrecken kann. Die verschiebliche Führung der Endabschnitte 4a, 4b des errsten Anschlusselements 4 entlang der als Führungsschienen dienenden Schienen 6, 7 ist in nicht näher ersichtlicher Weise derart ausgestaltet, dass eine auf eine dieser Schienen 6, 7 einwirkende und diese zumindest bereichsweise räumlich auslenkende Kraft K zumindest durch das erste Anschlusselement 4 unmittelbar auf die jeweils andere Schiene 6, 7 übertragbar ist.

Dabei ist die Schutzabdeckung 2 inmitten der beiden Schienen 6, 7 gelegen. Die als inmitten beschriebene Lage meint im Rahmen der Erfindung sowohl die vollständige als auch zumindest bereichsweise Anordnung der Schutzabdeckung 2 zwischen den beiden Schienen 6, 7 wie auch die zumindest bereichsweise Anordnung der Schutzabdeckung 2 unterhalb oder oberhalb einer sich zwischen den Schienen 6, 7 aufspannenden Ebene. So wird die Lage der Schutzabdeckung 2 auch dann als inmitten der Schienen 6, 7 angesehen, wenn diese tatsächlich außerhalb der Ebene liegt und beispielsweise über entsprechende Elemente oberhalb oder unterhalb dieser Ebene verläuft. Insofern meint inmitten hierbei vielmehr die Projektion einer Aufsicht auf die Abdeckvorrichtung 1, in der die Schutzabdeckung 2 unabhängig von der relativen Höhenlage zu den Schienen 6, 7 stets als zwischen diesen gelegen erkennbar ist.

An dem ersten Anschlusselement 4 ist eine parallel zu dessen Längsrichtung Y1 verschiebliche erste Verriegelungsleiste 8 angeordnet. Im Bereich ihrer beiden Endabschnitte ist jeweils ein Hakenelement 8a, 8b angeordnet oder ausgebildet, welches über eine Verschiebung der ersten Verriegelungsleiste 8 parallel zur Längsrichtung Y1 zwischen einer hier ersichtlichen Verriegelungsstellung ZV und einer Entriegelungsstellung SE (hier nicht gezeigt) verlagerbar ist. Weiterhin weist die erste Verriegelungsleiste 8 zwei in Bezug auf die Längsrichtung Y1 zueinander beabstandete Ausnehmungen 8c, 8d auf, die zum zweiten Anschlusselement 5 hin geöffnet sind. An dem zweiten Anschlusselement 5 ist ebenfalls eine parallel zu dessen Längsrichtung Y2 verschiebliche zweite Verriegelungsleiste 9 angeordnet. Die zweite Verriegelungsleiste 9 weist zwei Vorsprünge 9a, 9b auf, die in Bezug auf die Längsrichtung Y2 im gleichen Maß wie die Ausnehmungen 8c, 8d der ersten Verriegelungsleiste 8 voneinander beabstandet sind. Am zweiten Anschlusselement 5 ist ein vorzugsweise pneumatisch antreibbarer Linearantrieb 10 angeordnet, durch welchen die zweite Verriegelungsleiste 9 in Bezug auf die Längsrichtung Y2 in wenigstens eine Richtung aktiv verlagerbar ist.

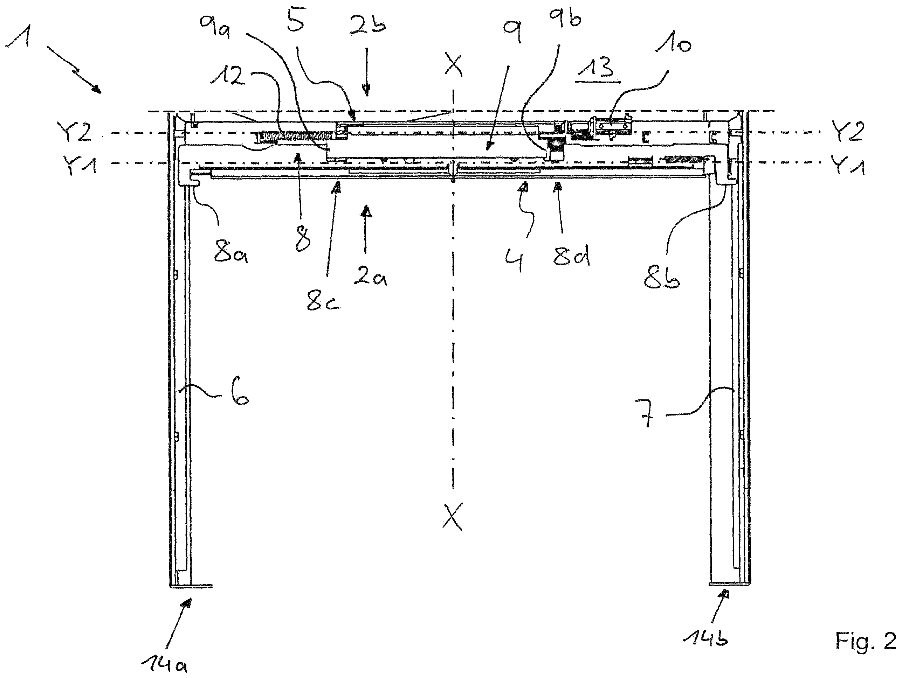

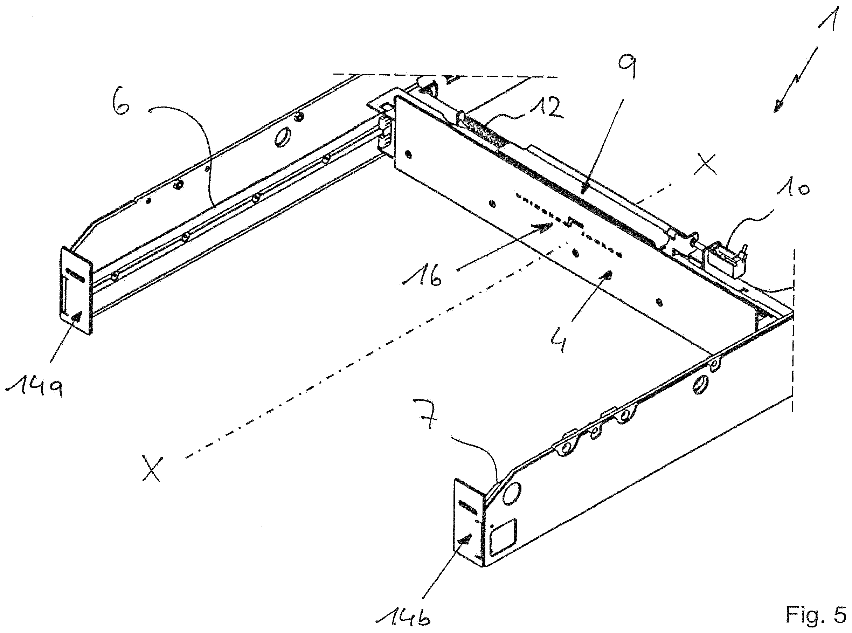

An dem ersten Anschlusselement 4 ist ein die erste Verriegelungsleiste 8 belastendes erstes Federelement 11 so angeordnet, dass die erste Verriegelungsleiste 8 nur entgegen der Federbelastung in die Entriegelungsstellung SE ihrer Hakenelemente 8a, 8b verschieblich ist. Demgegenüber ist die erste Verriegelungsleiste 8 vorliegend aufgrund der Federbelastung durch das erste Federelement 11 in ihrer Verriegelungsstellung SV gehalten. Bei einer unter Stauchung der Schutzabdeckung 2 möglichen Annäherung der beiden Anschlusselemente 4, 5 sind die beiden Vorsprünge 9a, 9b der zweiten Verriegelungsleiste 9 jeweils zumindest bereichsweise innerhalb einer der beiden mit diesen korrespondierenden Ausnehmungen 8c, 8d der ersten Verriegelungsleiste 8 anordenbar (vgl. Fig. 2 und Fig. 5). Die Ausnehmungen 8c, 8d der ersten Verriegelungsleiste 8 weisen hierzu jeweils eine Hinterschneidung 8e, 8f auf, über welche durch eine entsprechende Verschiebung der zweiten Verriegelungsleiste 9 deren Vorsprünge 9a, 9b jeweils im Bereich der zugehörigen Ausnehmung 8c, 8d auf eine Weise in Eingriff bringbar sind, dass die beiden unter Stauchung der Schutzabdeckung 2 einander angenäherten Anschlusselemente 4, 5 lösbar miteinander koppelbar sind (vgl. Fig. 2 und Fig. 5). Nach der Anordnung der Vorsprünge 9a, 9b innerhalb der Ausnehmungen 8c, 8d ist eine Verlagerung der zweiten Verriegelungsleiste 9 durch deren sich dabei innerhalb der Ausnehmungen 8c, 8d abstützenden Vorsprünge 9a, 9b in zumindest eine Richtung auf die erste Verriegelungsleiste 8 übertragbar. Konkret handelt es sich hierbei um jene übertragbare Bewegung der zweiten Verriegelungsleiste 9, die eine Verlagerung der Hakenelemente 8a, 8b der ersten Verriegelungsleiste 8 von der Verriegelungsstellung SV in die Entriegelungsstellung SE (nicht gezeigt) bewirkt. An dem zweiten Anschlusselement 5 ist ein zweites Federelement 12 derart angeordnet, dass die zweite Verriegelungsleiste 9 durch das zweite Federelement 12 federbelastet ist. Die Richtung der Federbelastung ist dabei so gewählt, dass die beide Anschlusselemente 4, 5 in ihrem miteinander gekoppelten Zustand nur durch eine Verschiebung der zweiten Verriegelungsleiste 9 entgegen der Federbelastung voneinander entkoppelbar sind.

Die Abdeckvorrichtung 1 ist üblicherweise zwischen einer hier nicht weiter erkennbaren Maschinenkabine und einem ebenfalls nicht näher erkennbaren und mit Bezugszeichen 13 nur angedeuteten Maschinenteil einer Maschine angeordnet, welches relativ zur Maschinenkabine beweglich ist. Bei dem beweglichen Maschinenteil 13 kann es sich beispielsweise um den Bearbeitungskopf einer CNC-Maschine handeln. Vorliegend ist die Schutzabdeckung 2 über ihr zweites Anschlusselement 5 in nicht näher gezeigter Weise mit dem Maschinenteil 13 verbunden. Besagte Verbindung kann beispielsweise über die Endabschnitte 5a, 5b des zweiten Anschlusselements 5 erfolgen. Auf diese Weise bewirkt eine Verlagerung des Maschinenteils 13 in Bewegungsrichtung X gleichzeitig die Verlagerung des zweiten Anschlusselements 5. Insbesondere im miteinander verriegelten Zustand der beiden Anschlusselemente 4, 5 lässt sich die gesamte Schutzabdeckung 2 über eine entsprechende Verlagerung des Maschinenteils 13 als Paket in Bezug auf die Bewegungsrichtung X verschieben. Die Maschinenkabine weist vorliegend zwei quer zur Bewegungsrichtung X voneinander beabstandete Kopplungsbereiche 14a, 14b auf, mit denen die sich in Verriegelungsstellung SV befindenden Hakenelemente 8a, 8b der ersten Verriegelungsleiste 8 in hier nicht näher ersichtlicher Weise in Eingriff stehen.

Fig. 2 zeigt die vollständig gestauchte Schutzabdeckung 2. Deren beiden Anschlusselemente 4, 5 sind miteinander verriegelt, indem die Vorsprünge 9a, 9b der zweiten Verriegelungsleiste 9 und die beiden Ausnehmungen 8c, 8d bzw. deren Hinterschneidungen 8e, 8f der ersten Verriegelungsleiste 8 in der zuvor beschriebenen Weise miteinander in Eingriff stehen. Ausgehend von der in Fig. 1 ersichtlichen Stellung wurde das mit dem Maschinenteil 13 verbundene zweite Anschlusselement 5 hierzu in Bezug auf die Bewegungsrichtung X so weit an das erste Anschlusselement 4 angenähert, bis diese miteinander verriegelt werden konnten. Konkret wurde nach dem Einfahren der Vorsprünge 9a, 9b der zweiten Verriegelungsleiste 9 in die Ausnehmungen 8c, 8d der ersten Verriegelungsleiste 8 die zweite Verriegelungsleiste 9 durch den Linearantrieb 10 in einer Weise verlagert, dass die sich dabei innerhalb der Ausnehmungen 8c, 8d abstützenden Vorsprünge 9a, 9b die erste Verriegelungsleiste 8 zwangsläufig mit verlagert haben, so dass deren Hakenelemente 8a, 8b von der Verriegelungsstellung SV in die Entriegelungsstellung SE wechselten. In dieser Lage griffen die Vorsprünge 9a, 9b der zweiten Verriegelungsleiste 9 hinter die Hinterschneidungen 8e, 8f in den Ausnehmungen 8c, 8d der ersten Verriegelungsleiste 8, woraufhin die Schutzabdeckung 2 als Paket mit dem Maschinenteil 13 in die hier ersichtliche zurückgeschobene Stellung verfahren werden konnte.

Gut erkennbar sind hierbei die beiden Schienen 6, 7, an denen vorliegend zumindest das erste Anschlusselement 4 spielfrei geführt ist. In dem hier gezeigten Beispiel sind die erste und zweite Verriegelungsleiste 8, 9 jeweils an einer nicht weiter ersichtlichen Linearführung, insbesondere spielfrei, geführt. Die zweite Verriegelungsleiste 9 kann bevorzugt mit einem Positionssensor zusammenwirken, so dass beispielsweise ihre verschiebliche Lage relativ zum zweiten Anschlusselement 5 erfassbar und an eine Maschinensteuerung gemeldet werden kann.

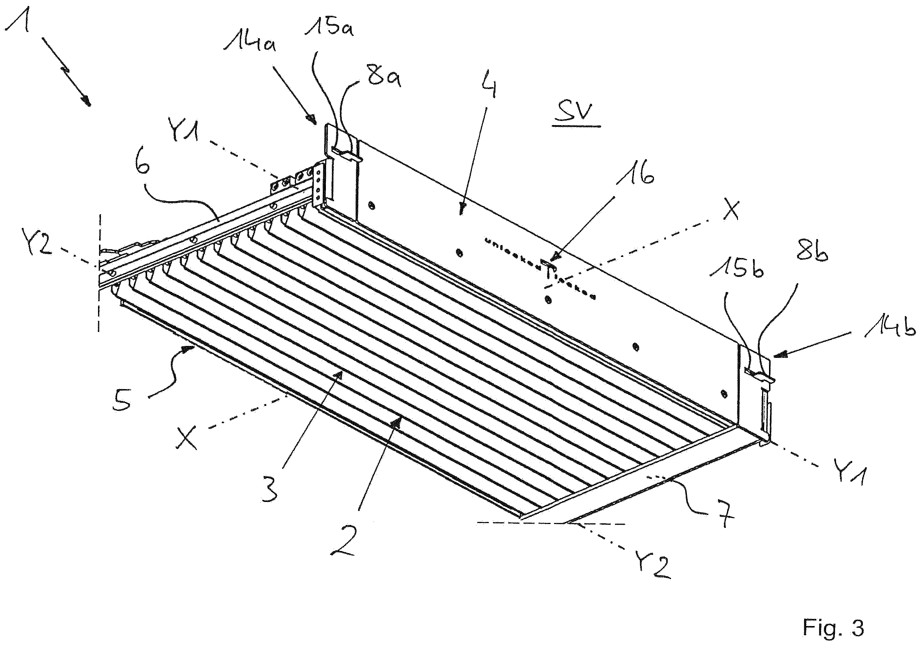

Fig. 3 zeigt die Abdeckvorrichtung 1 in einer perspektivischen Darstellung ihrer Unterseite. Erkennbar ist die Schutzabdeckung 2 hierbei gestreckt gezeigt, wobei die Verriegelung ihrer beiden Anschlusselemente 4, 5 aufgehoben ist. In dieser Darstellung wird deutlich, dass die beiden Kopplungsbereiche 14a, 14b jeweils eine Öffnung 15a, 15b besitzen, durch welche die beiden Hakenelemente 8a, 8b in ihrer hier ersichtlichen Verriegelungsstellung SV hindurchgreifen und einen die Öffnungen 15a, 15b begrenzenden Bereich des ersten Anschlusselements 4 umgreifen. Weiterhin erkennbar ist ein Anzeigemittel 16, welches zumindest teilweise von außen sichtbar am ersten Anschlusselement 4 angeordnet ist. Das Anzeigemittel 16 ist auf eine Weise mit der ersten Verriegelungsleiste 8 verbunden, dass die jeweilige Stellung der Hakenelemente 8a, 8b in Bezug auf deren Verriegelungsstellung SV und Entriegelungs-stellung SE anzeigbar ist.

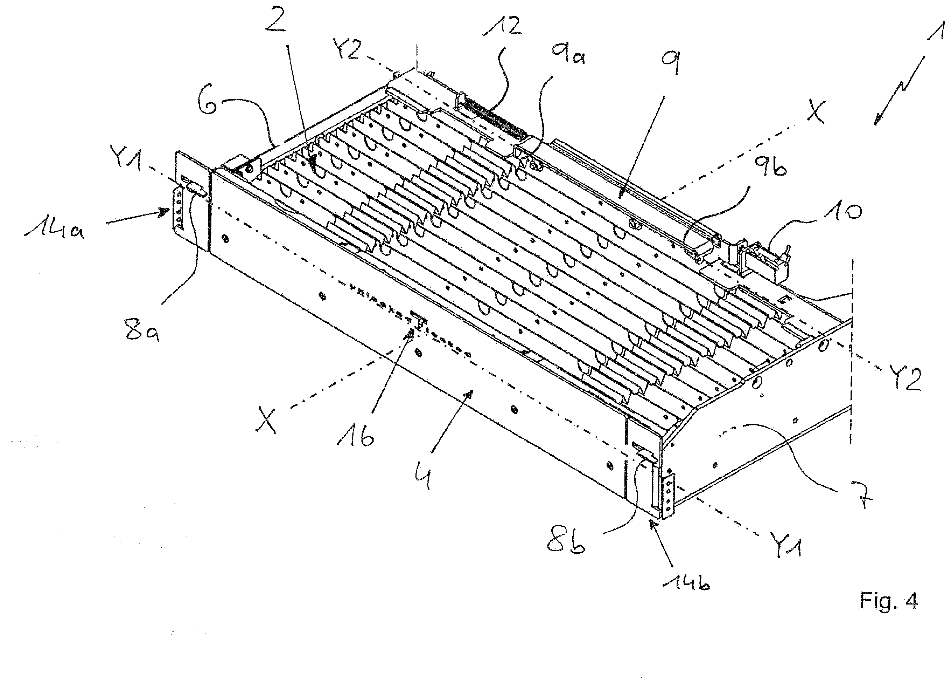

Fig. 4 zeigt die Abdeckvorrichtung 1 in einer geänderten perspektivischen Darstellung mit Blick auf ihre Oberseite. Hierbei ist insbesondere die Ausgestaltung der beiden Vorsprünge 9a, 9b der zweiten Verriegelungsleiste 9 besser zu erkennen, die sich im Wesentlichen nach unten zur Schutzabdeckung 2 hin erstrecken.

Fig. 5 ist die Darstellung der Abdeckvorrichtung 1 wie bereits in Fig. 4 zu entnehmen, nunmehr allerdings auch hier mit gestauchter und in zurückgeschobene Stellung verfahrener Schutzabdeckung 2. An dieser Stelle ist anzumerken, dass die sich an die beiden Kopplungsbereiche 14a, 14b anschließenden und demgegenüber abgewinkelten Teile solche des Maschinenraums andeuten, an denen die Schienen 6, 7 der Abdeckvorrichtung 1 festgelegt sind.

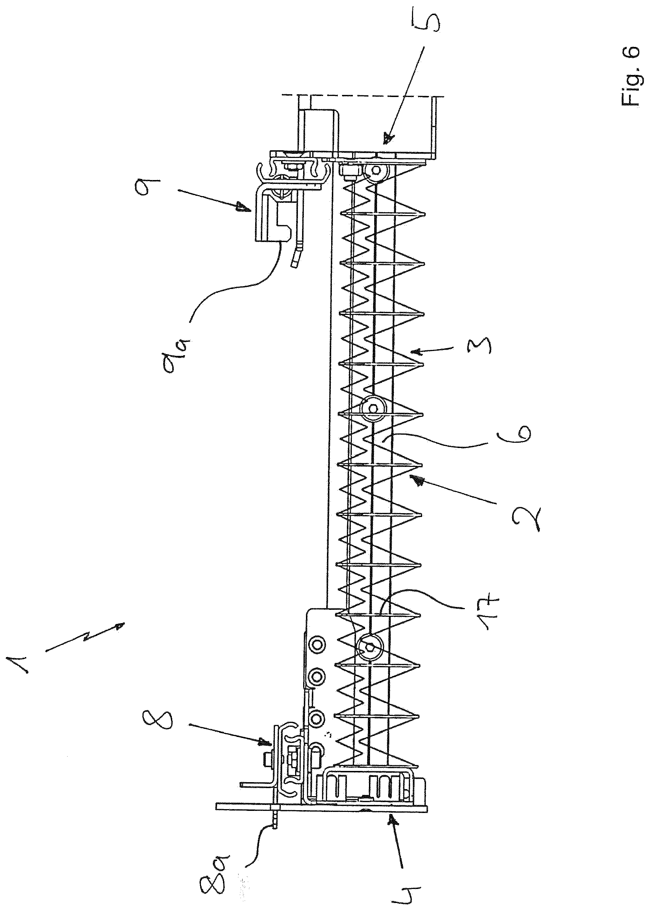

Fig. 6 zeigt einen Schnitt entlang der Bewegungsrichtung X-X der Schutzabdeckung 2. Ersichtlich sind die beiden Verriegelungsleisten 8, 9 jeweils an einer Linearführung angeordnet. Weiterhin erkennbar ist, dass der hier rein beispielhaft gezeigte Faltenbalg 3 der Schutzabdeckung 2 zwei übereinander angeordnete Zuschnitte aufweist, zwischen deren Falten sich einzelne Rahmen 17 erstrecken. Die Rahmen 17 können in nicht näher gezeigter Weise jeweils endseitig an den beiden Leisten 6, 7 geführt sein, so dass sich ein Durchhängen der Schutzabdeckung 2 verhindern lässt.

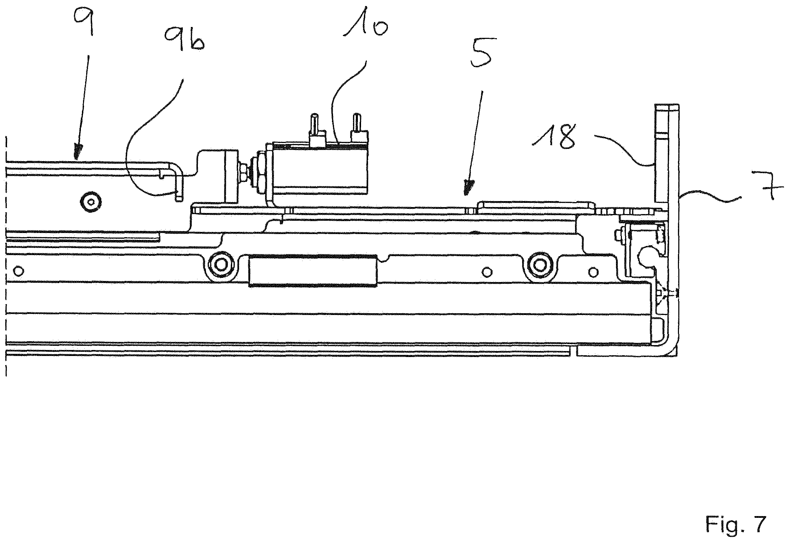

Fig. 7 ist ein Ausschnitt des zweiten Anschlusselements 5 im Bereich des Linearantriebs 10 mit Blick quer zur Bewegungsrichtung X zu entnehmen. An der hier im Schnitt erkennbaren Schiene 7 ist eine Anschlagleiste 18 angeordnet, entlang der die erste Verriegelungsleiste 8 in nicht näher dargestellter Weise entgegen der Federbelastung durch das erste Federelement 11 in der Entriegelungsstellung SE ihrer Hakenelemente 8a, 8b haltbar ist. Die Länge der Anschlagleiste 18 ist dabei so gewählt, dass bei einer Verlagerung des ersten Anschlusselements 4 in Bezug auf die Bewegungsrichtung X der Schutzabdeckung 2 hin zu den Kopplungsbereichen 14a, 14b der Maschinenkabine die erste Verriegelungsleiste 8 aufgrund ihrer Federbelastung in die Verriegelungsstellung SV ihrer Hakenelemente 8a, 8b verschiebbar ist.

## Patentansprüche

1. Abdeckvorrichtung (1) für eine Maschinenkabine, umfassend eine in Bezug auf ihre Bewegungsrichtung (X) streckbare sowie stauchbare Schutzabdeckung (2), an deren erstem Ende (2a) ein an wenigstens einen Kopplungsbereich (14a, 14b) der Maschinenkabine lösbar ankoppelbares erstes Anschlusselement (4) angeordnet ist und an deren zweitem Ende (2b) ein mit einem relativ zur Maschinenkabine beweglichen Maschinenteil (13) einer Maschine verbindbares zweites Anschlusselement (5) angeordnet ist, wobei die Schutzabdeckung (2) inmitten zweier parallel zu ihrer Bewegungsrichtung (X) verlaufenden sowie zur Festlegung am Maschinenteil (13) oder/ und an wenigstens einem Bereich der Maschinenkabine vorgesehenen Schienen (6, 7) gelegen ist, zwischen denen sich wenigstens eines der Anschlusselemente (4, 5) erstreckt und über seine Endabschnitte (4a, 4b) abgestützt ist,
**gekennzeichnet durch**
eine verschiebliche Führung der Endabschnitte (4a, 4b) des wenigstens einen Anschlusselements (4, 5) entlang der Schienen (6, 7) derart, dass eine auf eine dieser Schienen (6, 7) einwirkende und diese zumindest bereichsweise räumlich auslenkende Kraft (K) durch wenigstens eines der Anschlusselemente (4) unmittelbar auf die jeweils andere Schiene (6, 7) übertragbar ist.

2. Abdeckvorrichtung (1) nach Anspruch 1,
**dadurch gekennzeichnet,**
**dass** die Schienen (6, 7) jeweils wenigstens ein Längsprofil und mindestens einen entlang des Längsprofils ver-schieblichen Schlitten aufweisen, wobei die mit wenigstens einem der Anschlusselemente (4, 5) verbundenen Schlitten der Schienen (6, 7) zumindest in Bezug auf eine Längsrichtung (Y1, Y2) dieses Anschlusselements (4, 5) spielfrei in oder/und an den Längsprofilen der Schienen (6, 7) geführt sind.

3. Abdeckvorrichtung (1) nach Anspruch 2,
**dadurch gekennzeichnet,**
**dass** die Schlitten und die Längsprofile der Schienen (6, 7) zumindest in einer Ebene unter Eingliederung von Kugellagern oder/und Gleitlagern gegeneinander abgestützt sind.

4. Abdeckvorrichtung (1) nach einem der vorhergehenden Ansprüche,
**dadurch gekennzeichnet,**
**dass** an dem ersten Anschlusselement (4) eine parallel zu dessen Längsrichtung (Y1) verschiebliche erste Verriegelungsleiste (8) angeordnet ist, wobei die erste Verriegelungsleiste (8) wenigstens ein mit einer Öffnung (15a, 15b) oder Vertiefung des wenigstens einen Kopplungsbereichs (14a, 14b) der Maschinenkabine korrespondierendes Hakenelement (8a, 8b) besitzt, welches durch eine Verschiebung der ersten Verriegelungsleiste (8) zwischen einer Verriegelungsstellung (SV) und einer Entriegelungs-stellung (SE) verlagerbar ist.

5. Abdeckvorrichtung (1) nach einem der vorhergehenden Ansprüche,
**dadurch gekennzeichnet,**
**dass** an dem zweiten Anschlusselement (5) eine parallel zu dessen Längsrichtung (Y2) verschiebliche zweite Verriegelungsleiste (9) angeordnet ist, wobei die zweite Verriegelungsleiste (9) wenigstens einen Vorsprung (9a, 9b) aufweist, welcher bei einer Annäherung der beiden Anschlusselemente (4, 5) zumindest bereichsweise innerhalb einer korrespondierenden Ausnehmung (8c, 8d) der ersten Verriegelungsleiste (8) anordenbar ist, wobei nach Anordnung des Vorsprungs (9a, 9b) innerhalb dieser Ausnehmung (8c, 8d) eine Verlagerung der zweiten Verriegelungsleiste (9) durch deren wenigstens einen Vorsprung (9a, 9b) in zumindest eine Richtung auf die erste Verriegelungsleiste (8) übertragbar ist.

6. Abdeckvorrichtung (1) nach Anspruch 5,
**dadurch gekennzeichnet,**
**dass** die erste Verriegelungsleiste (8) oder die zweite Verriegelungsleiste (9) durch das Zusammenwirken mit einem Linearantrieb (10) oder/und dem Maschinenteil (13) zumindest in eine Richtung aktiv verschieblich ist.

7. Abdeckvorrichtung (1) nach Anspruch 5 oder 6,
**gekennzeichnet durch**
eine an der Ausnehmung (8c, 8d) der ersten Verriegelungsleiste (8) angeordnete Hinterschneidung (8e, 8f), über welche durch eine Verschiebung der zweiten Verriegelungsleiste (9) deren Vorsprung (9a, 9b) mit der Ausnehmung (8c, 8d) in Eingriff bringbar ist, derart, dass die beiden unter Stauchung der Schutzabdeckung (2) einander angenäherten Anschlusselemente (4, 5) lösbar miteinander koppelbar sind.

8. Abdeckvorrichtung (1) nach einem der Ansprüche 4 bis 7,
**gekennzeichnet durch**
ein die erste Verriegelungsleiste (8) des ersten Anschlusselements (4) belastendes erstes Federelement (11) derart, dass die erste Verriegelungsleiste (8) nur entgegen der Federbelastung in die Entriegelungsstellung (SE) ihres wenigstens einen Hakenelements (8a, 8b) verschieb-lich ist.

9. Abdeckvorrichtung (1) nach Anspruch 7 oder 8,
**gekennzeichnet durch**
ein die zweite Verriegelungsleiste (9) des zweiten Anschlusselements (5) belastendes zweites Federelement (12) derart, dass beide Anschlusselemente (4, 5) in ihrem miteinander gekoppelten Zustand nur durch eine Verschiebung der zweiten Verriegelungsleiste (9) entgegen der Federbelastung voneinander entkoppelbar sind.

10. Abdeckvorrichtung (1) nach einem der Ansprüche 4 bis 9,
**gekennzeichnet durch**
ein am ersten Anschlusselement (4) angeordnetes und mit dessen ersten Verriegelungsleiste (8) verbundenes Anzeigemittel (16) derart, dass die jeweilige Stellung des Hakenelements (8a, 8b) wenigstens in Bezug auf dessen Verriegelungsstellung (SV) oder/und Entriegelungsstellung (SE) zumindest im von dem wenigstens einen Kopplungsbereich (14a, 14b) der Maschinenkabine entkoppelten Zustand des ersten Anschlusselements (4) anzeigbar ist.

11. Abdeckvorrichtung (1) nach einem der Ansprüche 8 bis 10,
**gekennzeichnet durch**
eine an einer der Schienen (7) angeordnete Anschlagleiste (18), entlang der die erste Verriegelungsleiste (8) entgegen der Federbelastung durch das erste Federelement (11) in der Entriegelungsstellung (SE) ihres wenigstens einen Hakenelements (8a, 8b) haltbar ist.

12. Abdeckvorrichtung (1) nach Anspruch 11,
**gekennzeichnet durch**
eine Länge der Anschlagleiste (18) derart, dass bei einer Verlagerung des ersten Anschlusselements (4) in Bezug auf die Bewegungsrichtung (X) der Schutzabdeckung (2) hin zum wenigstens einen Kopplungsbereich (14a, 14b) der Maschinenkabine die erste Verriegelungsleiste (8), insbesondere aufgrund der Federbelastung, in die Verriegelungsstellung (SV) ihres wenigstens einen Hakenelements (8a, 8b) verschiebbar ist.

13. Abdeckvorrichtung (1) nach einem der Ansprüche 4 bis 12,
**dadurch gekennzeichnet,**
**dass** die erste Verriegelungsleiste (8) oder/und die zweite Verriegelungsleiste (9) an einer, insbesondere spielfreien, Linearführung angeordnet ist/sind.

14. Abdeckvorrichtung (1) nach einem der Ansprüche 5 bis 13,
**dadurch gekennzeichnet,**
**dass** die zweite Verriegelungsleiste (9) mit einem Positionssensor zusammenwirkt, insbesondere zur Erfassung ihrer verschieblichen Lage relativ zum zweiten Anschlusselement (5).

15. Abdeckvorrichtung (1) nach einem der Ansprüche 6 bis 14,
**dadurch gekennzeichnet,**
**dass** der Linearantrieb (10) pneumatisch antreibbar ist.

16. Abdeckvorrichtung (1) nach einem der vorhergehenden Ansprüche,
**dadurch gekennzeichnet,**
**dass** die Schutzabdeckung (2) einen in Bezug auf die Bewegungsrichtung (X) längenveränderbaren Faltenbalg (3) aufweist.

17. Abdeckvorrichtung (1) nach Anspruch 16,
**dadurch gekennzeichnet,**
**dass** eine Deckseite des Faltenbalgs (3) mit sich wenigstens abschnittsweise überlappenden und während seiner Längenänderung gegeneinander verschieblichen Lamellen verkleidet ist.

18. Maschinenkabine mit wenigstens einer Abdeckvorrichtung (1) nach einem der vorhergehenden Ansprüche.

19. Maschinenkabine nach Anspruch 18,
**dadurch gekennzeichnet,**
**dass** die Abdeckvorrichtung (1) in Bezug auf die Bewegungsrichtung (X) ihrer Schutzabdeckung (2) zumindest abschnittsweise parallel oder unter Einschluss eines Neigungswinkels von kleiner 45° zu einer Horizontalen ausgerichtet ist.

20. Maschinenkabine nach Anspruch 18 oder 19,
**dadurch gekennzeichnet,**
**dass** die Abdeckvorrichtung (1) in Bezug auf die Bewegungsrichtung (X) ihrer Schutzabdeckung (2) zumindest abschnittsweise parallel oder unter Einschluss eines Neigungswinkels von kleiner 45° zu einer Vertikalen ausgerichtet ist.

21. Maschinensystem, umfassend eine Maschinenkabine nach einem der Ansprüche 18 bis 20 und eine zumindest bereichsweise innerhalb der Maschinenkabine angeordnete Maschine.

## Claims

1. Covering device (1) for a machine cabinet, comprising a protective cover (2) which can be stretched and compressed in relation to its direction of movement (X), wherein a first connection element (4) which can be releasably coupled to at least one coupling region (14a, 14b) of the machine cabinet is arranged at the first end (2a) of the cover, and a second connection element (5) which is connectable to a machine part (13), of a machine, that is movable relative to the machine cabinet is arranged at the second end (2b) of the protective cover, wherein the protective cover (2) is positioned in the middle of two rails (6, 7), which run parallel to its direction of movement (X) and are provided for fixing on the machine part (13) and/or on at least one region of the machine cabinet, wherein at least one of the connection elements (4, 5) extends between the two rails and is supported by way of its end portions (4a, 4b),
**characterised by**
a displaceable guide of the end portions (4a, 4b) of the at least one connection element (4, 5) along the rails (6, 7) in such a way that a force (K) acting on one of these rails (6, 7) and deflecting same at least in some parts in spatial directions, can be transferred by at least one of the connection elements (4) directly to the relevant other rail (6, 7).

2. Covering device (1) according to Claim 1,
**characterised in that**
the rails (6, 7) each have at least one longitudinal profile and at least one slide carriage displaceable along the longitudinal profile, wherein the slide carriages of the rails (6, 7) that are connected to at least one of the connection elements (4, 5) are guided at least in relation to a longitudinal direction (Y1, Y2) of this connection element (4, 5) without play in and/or on the longitudinal profiles of the rails (6, 7).

3. Covering device (1) according to Claim 2,
**characterised in that**
the slide carriages and the longitudinal profiles of the rails (6, 7) are supported against one another at least in one plane with the interposition of ball bearings and/or slide bearings.

4. Covering device (1) according to one of the preceding claims
**characterised in that**
a first locking strip (8) displaceable parallel to the longitudinal direction (Y1) of the connection element is arranged on the first connection element (4), wherein the first locking strip (8) has at least one hook element (8a, 8b) which corresponds with an opening (15a, 15b) or indentation of the at least one coupling region (14a, 14b) of the machine cabinet and which can be moved by sliding the first locking strip (8) between a locking position (SV) and an unlocking position (SE).

5. Covering device (1) according to one of the preceding claims
**characterised in that**
a second locking strip (9) which is displaceable parallel to the longitudinal direction (Y2) of the connection element is arranged on the second connection element (5) wherein the second locking strip (9) has at least one projection (9a, 9b) which when the two connection elements (4, 5) are close to one another can be arranged at least in some parts inside a corresponding recess (8c, 8d) of the first locking strip (8) wherein after arranging the projection (9a, 9b) inside this recess (8c, 8d) a displacement of the second locking strip (9) can be transferred through its at least one projection (9a, 9b) in at least one direction to the first locking strip (8).

6. Covering device (1) according to Claim 5
**characterised in that**
the first locking strip (8) or the second locking strip (9) is actively displaceable at least in one direction through the interaction with a linear drive (10) and/or the machine part (13).

7. Covering device (1) according to Claim 5 or 6
**characterised by**
a rear-cut section (8e, 8f) arranged on the recess (8c, 8d) of the first locking strip (8) and by means of which through displacement of the second locking strip (9) its projection (9a, 9b) can be brought into engagement with the recess (8c, 8d) so that the two connection elements (4, 5) which have moved close to one another through compression of the protective cover (2) can be releasably coupled to one another.

8. Covering device (1) according to one of Claims 4 to 7
**characterised by**
a first spring element (11) loading the first locking strip (8) of the first connection element (4) so that the first locking strip (8) is displaceable into the unlocking position (SE) of its at least one hook element (8a, 8b) only against the spring loading.

9. Covering device (1) according to Claim 7 or 8
**characterised by**
a second spring element (12) loading the second locking strip (9) of the second connection element (5) so that the two connection elements (4, 5) in their coupled-together state can only be uncoupled from one another by the displacement of the second locking strip (9) against the spring loading.

10. Covering device (1) according to one of Claims 4 to 9
**characterised by**
an indicator member (16) arranged on the first connection element (4) and connected to its first locking strip (8) so that the relevant position of the hook element (8a, 8b) at least in relation to its locking position (SV) and/or unlocking position (SE) can be displayed at least in the state where the first connection element (4) is uncoupled from the at least one coupling region (14a, 14b) of the machine cabinet.

11. Covering device (1) according to one of Claims 8 to 10
**characterised by**
a stop strip (18) arranged on one of the rails (7) and along which the first locking strip (8) can be held against spring loading by the first spring element (11) in the unlocking position (SE) of its at least one hook element (8a, 8b).

12. Covering device (1) according to Claim 11
**characterised by**
a length of the stop strip (18) such that with a displacement of the first connection element (4) in relation to the direction of movement (X) of the protective cover (2) towards the at least one coupling region (14a, 14b) of the machine cabinet the first locking strip (8) is displaceable, in particular as a result of the spring loading, into the locking position (SV) of its at least one hook element (8a, 8b).

13. Covering device (1) according to one of Claims 4 to 12
**characterised in that**
the first locking strip (8) and/or the second locking strip (9) is/are arranged on an, in particular play-free, linear guide.

14. Covering device (1) according to one of Claims 5 to 13
**characterised in that**
the second locking strip (9) interacts with a position sensor, in particular for detecting its displaceable position relative to the second connection element (5).

15. Covering device (1) according to one of Claims 6 to 14
**characterised in that**
the linear drive (10) can be pneumatically driven.

16. Covering device (1) according to one of the preceding claims
**characterised in that**
the protective cover (2) has a bellows (3) which can be changed in length in relation to the direction of movement (X).

17. Covering device (1) according to Claim 16
**characterised in that**
a cover side of the bellows (3) is lined with lamella slats which overlap in at least some sections and which are displaceable relative to one another during the change in length.

18. Machine cabinet with at least one covering device (1) according to one of the preceding claims.

19. Machine cabinet according to Claim 18
**characterised in that**
the covering device (1) is oriented in relation to the direction of movement (X) of its protective cover (2) at least in some sections parallel to, or by including an inclined angle of less than 45° to, a horizontal.

20. Machine cabinet according to Claim 18 or 19
**characterised in that**
the covering device (1) is oriented in relation to the direction of movement (X) of its protective cover (2) at least in some areas parallel to, or by including an inclined angle of less than 45° to, a vertical.

21. Machine system, comprising a machine cabinet according to one of Claims 18 to 20 and a machine arranged at least in part inside the machine cabinet.

## Revendications

1. Dispositif de recouvrement (1) pour une armoire de machine comprenant une couverture protectrice (2) pouvant être étirée et écrasée par rapport à son sens de déplacement (X), à la première extrémité (2a) de laquelle un premier élément de raccord (4) est disposé qui peut être accouplé amovible à au moins une zone d'accouplement (14a, 14b) de l'armoire de machine, et à la deuxième extrémité (2b) de laquelle un deuxième élément de raccord (5) est disposé, qui peut être relié à une partie de machine (13) d'une machine qui est mobile par rapport à l'armoire de machine, dans lequel la couverture protectrice (2) est placée au milieu de deux voies (6, 7) s'étendant parallèlement à son sens de déplacement (X) et qui sont destinées à être fixées à la partie de machine (13) et/ou à au moins une zone de l'armoire de machine, au moins l'un des éléments de raccord (4, 5) s'étendant entre les voies et étant supporté par ses parties d'extrémité (4a, 4b),
**caractérisé par**
un guidage coulissant des parties d'extrémité (4a, 4b) de l'au moins un éléments de raccord (4, 5) le long des voies (6, 7) de telle sorte qu'une force (K) agissant sur l'une de ces voies et déviant celle-ci dans l'espace au moins par zones puisse être transmise directement à l'autre voie (6, 7) respectif par au moins l'un des éléments de raccord (4).

2. Dispositif de recouvrement (1) selon la revendication 1,
**caractérisé en ce**
**que** les voies (6, 7) comportent chacune au moins un profil longitudinal et au moins un chariot déplaçable le long du profil longitudinal, dans lequel les chariots des voies (6, 7) reliés à au moins l'un des éléments de raccord (4, 5) sont guidés, au moins par rapport à une direction longitudinale (Y1, Y2) de cet élément de raccord (4, 5), sans jeu dans ou/et aux profils longitudinaux des voies (6, 7).

3. Dispositif de recouvrement (1) selon la revendication 2,
**caractérisé en ce**
**que** les chariots et les profils longitudinaux des voies (6, 7) sont soutenus l'un contre l'autre au moins dans un plan en intégrant des roulements à billes ou/et des paliers à glissement.

4. Dispositif de recouvrement (1) selon l'une quelconque des revendications précédentes,
**caractérisé en ce**
**qu'**une première languette de verrouillage (8) déplaçable parallèlement à sa direction longitudinale (Y1) est disposée au premier élément de raccord (4), dans lequel la première languette de verrouillage (8) comporte au moins un élément de crochet (8a, 8b) correspondant à une ouverture (15a, 15b) ou une cavité de l'au moins une zone d'accouplement (14a, 14b) de l'armoire de machine, dans lequel l'élément de crochet (8a, 8b) est déplaçable par un déplacement de la première languette de verrouillage (8) entre une position de verrouillage (SV) et une position de déverrouillage (SE).

5. Dispositif de recouvrement (1) selon l'une quelconque des revendications précédentes,
**caractérisé en ce**
**qu'**une deuxième languette de verrouillage (9) est disposée au deuxième élément de raccord (5) déplaçable parallèlement à sa direction longitudinale (Y2), dans lequel la deuxième languette de verrouillage (9) comporte au moins une saillie (9a, 9b), qui, lors d'une approche des deux éléments de raccord (4, 5), au moins par zones peut être disposée dans un évidement (8c, 8d) correspondant de la première languette de verrouillage (8), dans lequel, après agencement de la saillie (9a, 9b) dans cet évidement (8c, 8d), un déplacement de la deuxième languette de verrouillage (9) par sa au moins une saillie (9a, 9b) est transférable à la première languette de verrouillage (8) dans au moins une direction.

6. Dispositif de recouvrement (1) selon la revendication 5,
**caractérisé en ce**
**que** la première languette de verrouillage (8) ou la deuxième languette de verrouillage (9), par l'interaction avec un entraînement linéaire (10) ou/et la partie de machine (13), est activement déplaçable au moins dans une direction.

7. Dispositif de recouvrement (1) selon la revendication 5 ou 6,
**caractérisé par**
une contre-dépouille (8e, 8f) disposée à l'évidement (8c, 8d) de la première languette de verrouillage (8), par laquelle, par un déplacement de la deuxième languette de verrouillage (9), sa saillie (9a, 9b) peut être amenée en prise avec l'évidement (8c, 8d), de telle sorte que les deux éléments de raccord (4, 5) rapprochés l'un de l'autre par écrasement du couverture protectrice (2) puissent être couplés l'un à l'autre de manière amovible.

8. Dispositif de recouvrement (1) selon l'une quelconque des revendications 4 à 7,
**caractérisé par**
un premier élément de ressort (11) sollicitant la première languette de verrouillage (8) du premier élément de raccord (4) de sorte que la première languette de verrouillage (8) ne peut être déplacée dans la position de déverrouillage (SE) de son au moins un élément de crochet (8a, 8b) qu'à l'encontre de la charge du ressort.

9. Dispositif de recouvrement (1) selon la revendication 7 ou 8,
**caractérisé par**
un deuxième élément de ressort (12) sollicitant la deuxième languette de verrouillage (9) du deuxième élément de raccord (5) de sorte que les deux éléments de raccord (4, 5) ne peuvent être découplés l'un de l'autre dans leur état couplé que par un déplacement de la deuxième languette de verrouillage (9) à l'encontre de la charge du ressort.

10. Dispositif de recouvrement (1) selon l'une quelconque des revendications 4 à 9,
**caractérisé par**
un moyen d'affichage (16) disposé au premier élément de raccord (4) et lié à sa première languette de verrouillage (8) de sorte que la position respective de l'élément de crochet (8a, 8b), au moins par rapport à sa position de verrouillage (SV) ou/et sa position de déverrouillage (SE), est affichable au moins dans l'état découplé du premier élément de raccord (4) découplé de l'au moins une zone d'accouplement (14a, 14b) de l'armoire de machine.

11. Dispositif de recouvrement (1) selon l'une quelconque des revendications 8 à 10,
**caractérisé par**
une barre de butée (18) disposée à une des voies (7) le long de laquelle la première languette de verrouillage (8) peut être maintenue dans la position de déverrouillage (SE) de son au moins un élément de crochet (8a, 8b) à l'encontre de la charge du ressort par le premier élément de ressort (11).

12. Dispositif de recouvrement (1) selon la revendication 11,
**caractérisé par**
une longueur de la barre de butée (18) de sorte que, lors d'un déplacement du premier élément de raccord (4) par rapport à la direction de déplacement (X) de la couverture protectrice (2) vers l'au moins une zone d'accouplement (14a, 14b) de l'armoire de machine, la première languette de verrouillage (8) peut être déplacée, en particulier en raison de la charge du ressort, dans la position de verrouillage (SV) de son au moins un élément de crochet (8a, 8b).

13. Dispositif de recouvrement (1) selon l'une quelconque des revendications 4 à 12,
**caractérisé en ce**
**que** la première languette de verrouillage (8) ou/et la deuxième languette de verrouillage (9) est/sont disposée(s) à un guidage linéaire, surtout sans jeu.

14. Dispositif de recouvrement (1) selon l'une quelconque des revendications 5 à 13,
**caractérisé en ce**
**que** la deuxième languette de verrouillage (9) coopère avec un capteur de position, surtout pour la détection de sa position mobile par rapport au deuxième élément de raccord (5)

15. Dispositif de recouvrement (1) selon l'une quelconque des revendications 6 à 14,
**caractérisé en ce**
**que** l'entraînement linéaire (10) est à entraînement pneumatique.

16. Dispositif de recouvrement (1) selon l'une quelconque des revendications précédentes,
**caractérisé en ce**
**que** la couverture protectrice (2) comporte un soufflet (3) avec une longueur modifiable par rapport au sens de déplacement (X).

17. Dispositif de recouvrement (1) selon la revendication 16,
**caractérisé en ce**
**qu'**une face de recouvrement du soufflet (3) est recouverte par des lamelles se chevauchant au moins dans certaines parties et déplaçable l'une par rapport à l'autre pendant sa modification de longueur.

18. Armoire de machine comportant au moins un dispositif de recouvrement (1) selon l'une quelconque des revendications précédentes.

19. Armoire de machine selon la revendication 18,
**caractérisé en ce**
**que** le dispositif de recouvrement (1) est orienté par rapport à la direction de déplacement (X) de sa couverture protectrice (2), au moins dans certaines parties, parallèlement à une horizontale ou en incluant un angle d'inclinaison inférieur à 45°.

20. Armoire de machine selon la revendication 18 ou 19,
**caractérisé en ce**
**que** le dispositif de recouvrement (1) est orienté par rapport à la direction de déplacement (X) de sa couverture protectrice (2), au moins dans certaines parties, parallèlement à une verticale ou en incluant un angle d'inclinaison inférieur à 45°.

21. Système de machine comportant une armoire de machine selon l'une quelconque des revendications 18 à 20 et une machine disposée au moins par zones dans l'armoire de machine.
